# EUROPÄISCHE PATENTSCHRIFT

(11) **EP 2 072 380 B1**
(45) Veröffentlichungstag und Bekanntmachung des Hinweises auf die Patenterteilung: **20.05.2015**
(21) Anmeldenummer: 08020779.8
(22) Anmeldetag: 29.11.2008
(51) Int. Cl.: B62D 29/04

(54) **Bauteil und Verfahren zur Befestigung eines Bauteils**
Component and method for fixing a component
Composant et procédé destiné à la fixation d'un composant

(30) Priorität: 21.12.2007 DE 102007062071
(43) Veröffentlichungstag der Anmeldung: 24.06.2009
(73) Patentinhaber: Bayerische Motoren Werke Aktiengesellschaft, 80809 München (DE)
(72) Erfinder: Schwimmbeck, Richard, 84166 Adlkofen (DE)

(56) Entgegenhaltungen:
- EP-A- 0 860 615
- DE-U1-202004 020 237

## Beschreibung

Die Erfindung betrifft ein Bauteil sowie ein Verfahren zur Befestigung eines Bauteils.

Bei der Befestigung von Karosserieteilen an einem Fahrzeug werden diese an bestimmten vorgegebenen Positionen fixiert. Beispielsweise wird ein Kotflügel an bestimmten Montagepunkten mit dem Fahrzeug verschraubt.

Sind die Karosserieteile an dem Fahrzeug angebracht, wird z.B. im Rahmen einer kathodischen Tauchlackierung (KTL) ein Korrosionsschutz in einem on-line Verfahren mit Trocknungstemperaturen von ca. 200°C aufgebracht. Bei einem sog. in-line Verfahren wird das Bauteil im Anschluss an den KTL-Trockner an das Fahrzeug montiert. Hierbei herrschen Lacktrocknungstemperatur von ca. 140°C.

Zunehmend werden als Karosserieteile auch Kunststoffe eingesetzt, die einen gegenüber Stahl oder Aluminium deutlich größeren Wärmeausdehnungskoeffizienten aufweisen. Bei einer Erwärmung in einem Lacktrockner dehnt sich ein Karosserieteil aus Kunststoff entsprechend stärker aus. Eine starre Befestigung der Kunststoffteile führt dazu, dass sich diese irreversibel verformen, z.B. ausbeulen, was im Hinblick auf eine ästhetische Formgebung des Fahrzeugs inakzeptabel ist.

Eine derartige Ausdehnung findet - wenn auch in reduziertem Umfang - auch im üblichen Einsatz eines Kraftfahrzeugs statt. So können in entsprechenden Gegenden zu bestimmten Jahreszeiten Karosserieteile Temperaturen von ca. 85°C erreichen, wohingegen in einer winterlichen Umgebung auch Temperaturen von weniger als -35°C ohne sichtbare Verformung der Karosserieteile möglich sein müssen.

Aus der EP 0 860 615 A1, die den Oberbegriff des Anspruchs 1 bildet, ist bereits ein Bauteil mit einer Längsnut und einem Gleitelement bekannt, das eine Sollbruchstelle mit dem Bauteil aufweist und zumindest teilweise zum gleitenden Eingriff in die Längsnut ausgestaltet ist.

Auch aus der DE 20 2004 020 237 U1 ist ein Bauteil mit einer Längsnut und einem Gleitelement bekannt, das zum gleitenden Eingriff in die Längsnut ausgestaltet ist.

In diesem Zusammenhang offenbart DE 699 03 875 T2 eine Befestigungsvorrichtung ("Gleitbefestigungsvorrichtung"), die eine Gleitbewegung des Karosserieteils in Bezug auf ein Strukturteil des Kraftfahrzeugs ermöglicht.

Hierbei ist es von Nachteil, dass die Gleitbefestigungsvorrichtung aufwändig ist und insbesondere im Rahmen der Montage vorab platziert werden muss.

Die **Aufgabe** der Erfindung besteht darin, die vorstehend genannten Nachteile zu vermeiden und insbesondere eine effiziente und verbesserte Möglichkeit der Fixierung und Montage eines Bauteils anzugeben, wobei das Bauteil auch bei hohen Temperaturen vorteilhaft eine Ausdehnung entlang eines Gleitwegs kompensieren kann.

Diese Aufgabe wird gemäß den Merkmalen der unabhängigen Patentansprüche gelöst. Weiterbildungen der Erfindung ergeben sich auch aus den abhängigen Ansprüchen.

Zur Lösung der Aufgabe wird ein Bauteil nach Anspruch 1 angegeben.

Dabei ist in oder an dem Gleitelement eine Distanzbuchse vorgesehen. Diese Distanzbuchse verhindert insbesondere ein Kriechen des Kunststoffes im verschraubten Zustand, sodass das Anzugsmoment der Schraube über die Fahrzeuglebensdauer erhalten bleibt.

Eine Gesamthöhe bzw. eine Kragenhöhe der Distanzbuchse ist geringfügig höher als das Gleitelement, um auch in der Höhe ein Gleitspiel zu ermöglichen. Somit ist es vorteilhaft möglich, dass auch bei gelösten Gleitelement (nach Durchbrechen der Sollbruchstelle) die Distanzbuchse noch mit dem Gleitelement verbunden, z.B. von diesem gehalten wird.

Hierbei ist vorteilhaft das Gleitelement an dem Bauteil angebracht, so dass es entsprechend mit dem Bauteil bewegt und einer Montage zugeführt werden kann. Insbesondere entfällt der aufwändige Schritt, separat ein Gleitelement vorbereiten und/oder positionieren zu müssen. Stattdessen ist bei der Montage bereits das Gleitelement an der dafür vorgesehenen Stelle positioniert. Das Gleitelement kann somit nicht verrutschen, es kann aber bei der Montage entlang der Sollbruchstelle von dem Bauteil gelöst werden und zumindest teilweise in die Längsnut eingreifen.

Hierdurch werden die Vorteile des Gleitelements realisiert, anhand derer das Bauteil entlang der Längsnut beweglich fixierbar ist derart, dass z.B. Temperaturveränderungen und die sich dadurch ergebenden Veränderungen des Bauteils entlang des Gleitwegs kompensiert werden können. Hierdurch wird verhindert, dass das Bauteil aufgrund von Größenveränderungen z.B. infolge von Temperaturschwankungen, Schwindungsprozessen oder wechselnden Feuchtegehalten Beulen oder Wellen bildet.

Es ist eine Ausgestaltung, dass das Bauteil einen von beispielsweise einem Strukturteil eines Kraftfahrzeugs deutlich unterschiedlichen thermischen (Längen-)Ausdehnungskoeffizienten aufweist.

Das Bauteil kann mindestens einen der folgenden Werkstoffe aufweisen:
- einen Kunststoff, insbesondere einen faserverstärkten Kunststoff, insbesondere einen kohlefaserverstärkten Kunststoff (CFK);
- ein Leichtmetall, insbesondere auf der Basis Aluminium, Magnesium, Titan, und/oder deren Legierungen.

Insbesondere kann somit das Gleitelement an einer vorgegebenen Stelle, z.B. oberhalb der Längsnut, vorpositioniert sein.

Eine Weiterbildung ist es, dass das Gleitelement oberhalb oder unterhalb der Längsnut angeordnet ist.

Insbesondere ist es eine Weiterbildung, dass die Längsnut zur Aufnahme des Gleitelements ausgestaltet ist.

Insbesondere kann die Längsnut so ausgeführt sein, dass das Gleitelement zumindest teilweise oder auch vollständig in die Längsnut eingreifen kann.

Auch ist es eine Weiterbildung, dass das Bauteil ein Karosserieteil eines Fahrzeugs, insbesondere ein flächiges Karosserieteil, ist. Auch ist es möglich, dass das Bauteil ein Interieurteil ist.

Ferner ist es eine Weiterbildung, dass das Bauteil eines der folgenden Teile umfasst:
- einen Kotflügel,
- einen Stoßfänger,
- ein Schweller,
- eine Heckklappe oder mindestens ein Teil der Heckklappe,
- eine Türe oder mindestens ein Teil der Türe,
- eine Frontklappe oder mindestens ein Teil der Frontklappe,
- einen Spoiler,
- ein Dach,
- ein Interieur-Teil.

Insbesondere können unterschiedliche Bauteile im Inneren, z.B. als Interieur-Teile, und/oder außerhalb, z.B. an der oder als Karosserie des Kraftfahrzeugs befestigt werden oder sein.

Beispielsweise können Teile eines Kraftfahrzeugs betroffen sein, bei denen im Verlauf des Kraftfahrzeuglebens eine Ausdehnungsbewegung gegenüber der Karosserie des Kraftfahrzeugs gegeben sein sollte.

Im Rahmen einer zusätzlichen Weiterbildung ist das Gleitelement mit dem Bauteil einstückig ausgeführt.

Hierdurch erleichtert sich die Montage erheblich, weil nicht gesondert ein Gleitelement positioniert werden muss.

Eine nächste Weiterbildung besteht darin, dass das Gleitelement eine Montagestellung zu der Längsnut aufweist.

Eine Ausgestaltung ist es, dass die Distanzbuchse lösbar als ein separates Bauteil angeordnet oder bereits bei der Herstellung des Bauteils als Einlegeteil mit eingespritzt ist. Insbesondere kann die Distanzbuchse unmittelbar vor der Montage des Bauteils zwischen einem Träger (z.B. einer Fahrzeugkarosserie oder einem Chassis) und dem Bauteil angeordnet werden. Beispielsweise kann die Distanzbuchse auch als eine Distanzhülse oder als eine Distanzscheibe ausgeführt sein.

Eine alternative Ausführungsform besteht darin, dass die Distanzbuchse mit mindestens einem Rasthaken an dem Gleitelement gesichert ist.

Hierdurch kann vorteilhaft die Distanzbuchse mit dem Gleitelement (z.B. lösbar) verbunden sein, so dass die Distanzbuchse vor der Montage des Bauteils nicht aufwändig platziert werden muss oder gar vergessen werden kann. Insbesondere können zwei Rasthaken vorgesehen sein, die innerhalb der Längsnut auf beiden Seiten des Gleitelements die Distanzbuchse sichern, so dass diese nicht herunterfallen und/oder verloren gehen kann.

Eine nächste Ausgestaltung ist es, dass die Distanzbuchse mindestens eine Sollknickstelle aufweist anhand derer die Distanzbuchse an dem Gleitelement sicherbar ist, wenn sich das Gleitelement zumindest teilweise in dem gleitenden Eingriff in der Längsnut befindet.

Auch ist es eine Ausgestaltung, dass ein Spiel zwischen dem Gleitelement und/oder der Längsnut anhand eines Winkels der Innenwand der Längsnut und/oder anhand eines Winkels der Außenwand des Gleitelements einstellbar und/oder vorgebbar ist.

Vorzugsweise gleitet das entlang der Sollbruchstelle gelöste Gleitelement in der Längsnut, d.h. die Außenwand des Gleitelements gleitet entlang der Innenwand der Längsnut. Ein ggf. notwendiges Gleitspiel zwischen der Innenwand der Längsnut und der Außenwand'der Gleitelements ist insbesondere einstellbar durch die jeweiligen Winkel der Wände. Hierdurch kann entsprechend ein Grad der Reibung beim Gleiten des Gleitelements vorgegeben werden.

Die vorstehend genannte Aufgabe wird auch gelöst durch ein Verfahren zur Befestigung eines Bauteils mit einem Träger, bei dem mit Befestigung des Bauteils an dem Träger das Gleitelement entlang der Sollbruchstelle bricht und zumindest teilweise in die Längsnut eingreift.

Vorzugsweise wird hierbei eine Distanzbuchse zwischen dem Träger und dem Karosserieteil angeordnet. Ferner kann eine Scheibe oberhalb des Gleitelements vorgesehen sein. Durch die Scheibe kann von oben eine Schraube mit dem Träger verschraubt und dabei das Gleitelement an der Sollbruchstelle durchbrochen werden.

Eine Weiterbildung besteht darin, dass das Bauteil mit dem Träger lösbar befestigt wird.

Eine Weiterbildung besteht darin, dass ein Durchbruch für eine Befestigungsschraube im wesentlichen quadratisch oder im wesentlichen rechteckig ausgeführt ist.

In dem Durchbruch kann ein Eckenradius von höchstens der gleichen Größe wie der Radius der Befestigungsschraube vorgesehen sein, um somit einen Toleranzausgleich zu schaffen, indem eine Einstellmöglichkeit in maximale Längs- und Querrichtung des zu befestigenden Teils zu ermöglichen.

Eine zusätzliche Ausgestaltung ist es, dass der Träger ein Karosserieteil oder ein Chassis eines Kraftfahrzeugs ist.

Die vorstehend genannte Aufgabe wird ferner gelöst durch ein Bauteil umfassend
- eine Längsnut;
- ein Gleitelement, das zumindest teilweise in gleitendem Eingriff mit der Längsnut ausgeführt ist;
- wobei das Bauteil und das Gleitelement einander entsprechende Bruchstellen aufweisen.

Für das Bauteil gelten die obigen Ausführungen entsprechend. Es handelt sich um das vorstehend beschriebene Bauteil mit durchbrochener Sollbruchstelle.

Ausführungsbeispiele der Erfindung werden nachfolgend anhand der Zeichnungen dargestellt und erläutert.

Es zeigen:
- Fig.1A: eine perspektivische Darstellung eines Kunststoffteils mit einem Gleitelement sowie einer Distanzbuchse;
- Fig.1B: eine Schnittzeichnung durch die Anordnung gemäß Fig.1A;
- Fig.2A: eine perspektivische Darstellung der Anordnung gemäß Fig.1A, wobei das Gleitelement entlang der Sollbruchstelle von dem Kunststoffteil gelöst ist;
- Fig.2B: eine Schnittzeichnung durch die Anordnung gemäß Fig.2A;
- Fig.3A: eine perspektivische Darstellung einer alternativen Ausführungsform eines Kunststoffteils mit einem Gleitelement sowie einer Distanzbuchse;
- Fig.3B: eine Schnittzeichnung durch die Anordnung gemäß Fig.3A;
- Fig.4A: eine perspektivische Darstellung der Anordnung gemäß Fig.3A, wobei das Gleitelement entlang der Sollbruchstelle von dem Kunststoffteil gelöst ist;
- Fig.4B: eine Schnittzeichnung durch die Anordnung gemäß Fig.4A;
- Fig.5A: eine perspektivische Darstellung einer weiteren Ausführungsform eines Kunststoffteils mit einem Gleitelement sowie einer Distanzbuchse, wobei die Distanzbuchse mittels Rasthaken an dem Gleitelement gesichert ist;
- Fig.5B: eine Schnittzeichnung durch die Anordnung gemäß Fig.5A;
- Fig.6A: eine perspektivische Darstellung der Anordnung gemäß Fig.5A, wobei das Gleitelement entlang der Sollbruchstelle von dem Kunststoffteil gelöst ist;
- Fig.6B: eine Schnittzeichnung durch die Anordnung gemäß Fig.6A.

Nachfolgend wird beispielsweise auf ein Kunststoffteil abgestellt. Es wird aber ausdrücklich darauf hingewiesen, dass andere Werkstoffe statt des Kunststoffs oder in Kombination mit dem Kunststoff einsetzbar sind.

Beispielhaft sind die folgenden Werkstoffe - auch in unterschiedlichen Kombination miteinander - gemäß dem hier vorgestellten Ansatz einsetzbar:
- ein Kunststoff, insbesondere ein faserverstärkter Kunststoff und/oder ein kohlefaserverstärkter Kunststoff;
- ein Leichtmetall, insbesondere auf der Basis von Aluminium und/oder Magnesium und/oder Titan und/oder deren Legierungen.

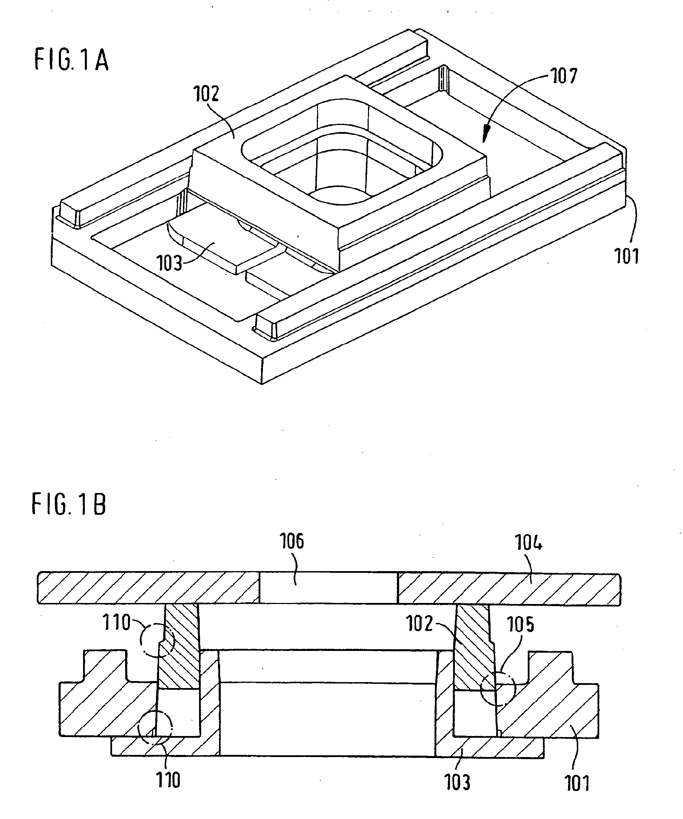

**Fig.1A** zeigt eine perspektivische Ansicht eines Kunststoffteils 101 mit einem Gleitelement 102 sowie einer Längsnut 107. **Fig.1B** zeigt eine Schnittzeichnung durch das Kunststoffteil 101 mit dem Gleitelement 102.

Das Gleitelement 102 weist eine Sollbruchstelle 105 mit dem Kunststoffteil 101 auf. Weiterhin gezeigt ist in Fig.1A und in Fig.1B eine Distanzbuchse 103, die von unten oder von oben in das Gleitelement 102 (z.B. lösbar) gesteckt ist. Zusätzlich zu Fig.1A zeigt Fig.1B noch eine Scheibe 104 mit einer Öffnung 106, durch die das Kunststoffteil 101 an einem Träger (nicht gezeigt, könnte aber unterhalb der Distanzbuche 103 vorgesehen sein) befestigbar ist.

Beispielsweise kann die Sollbruchstelle durchbrochen werden, indem in die Öffnung 106 gemäß Fig.1B eine Schraube eingeführt und mit dem Träger verschraubt wird. Durch die Scheibe 104 wird auf das Gleitelement 102 eine Kraft ausgeübt, die bewirkt, dass das Gleitelement 102 entlang der Sollbruchstelle 105 bricht und in die Längsnut 107 eingreift.

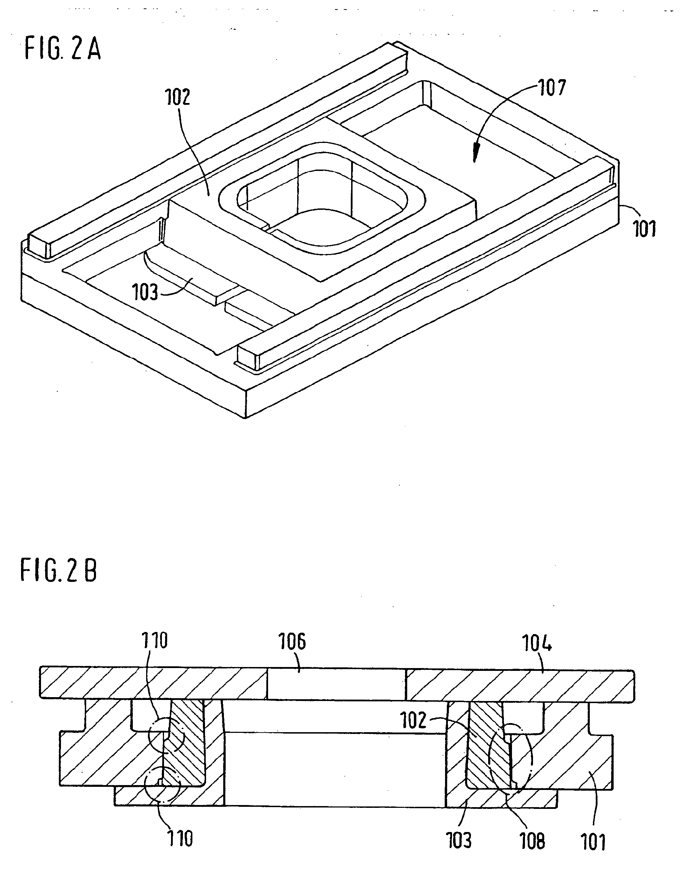

**Fig.2A** zeigt das Kunststoffteil 101, das entlang der Sollbruchstelle 105 von dem Gleitelement 102 gelöst ist, wobei das Gleitelement 102 zumindest teilweise in die Längsnut 107 eingreift. Entsprechend zeigt Fig.2B eine Schnittzeichnung durch das Kunststoffteil 101 mit dem Gleitelement 102.

In Fig.2B ist entlang der sich gegenüberstehenden Flächen 108 zu erkennen, dass anhand der Winkel der jeweiligen Flächen entsprechend ein Gleitspiel bzw. eine Führung entlang eines Gleitwegs von Gleitelement 102 und Längsnut 107 vorgebbar ist.

Beispielhaft ist das Kunststoffteil 101 ein Karosserieteil eines Kraftfahrzeugs, z.B. ein Kotflügel oder ein Dach. Die Figuren zeigen insbesondere anhand des Kunststoffteils einen Ausschnitt für ein derartiges Karosserieteil zur Montage auf einem Träger, z.B. an oder auf der Karosserie (z.B. an dem Chassis) eines Kraftfahrzeugs.

Weiterhin sind in Fig.1B und in Fig.2B Aussparungen 110 gezeigt, die der Aufnahme von überschüssigem Material dienen, das aufgrund des Durchbrechens der Sollbruchstelle 105 an dieser hängen bleiben kann und in der Folge die Gleitbewegung erschweren oder verhindern könnte.

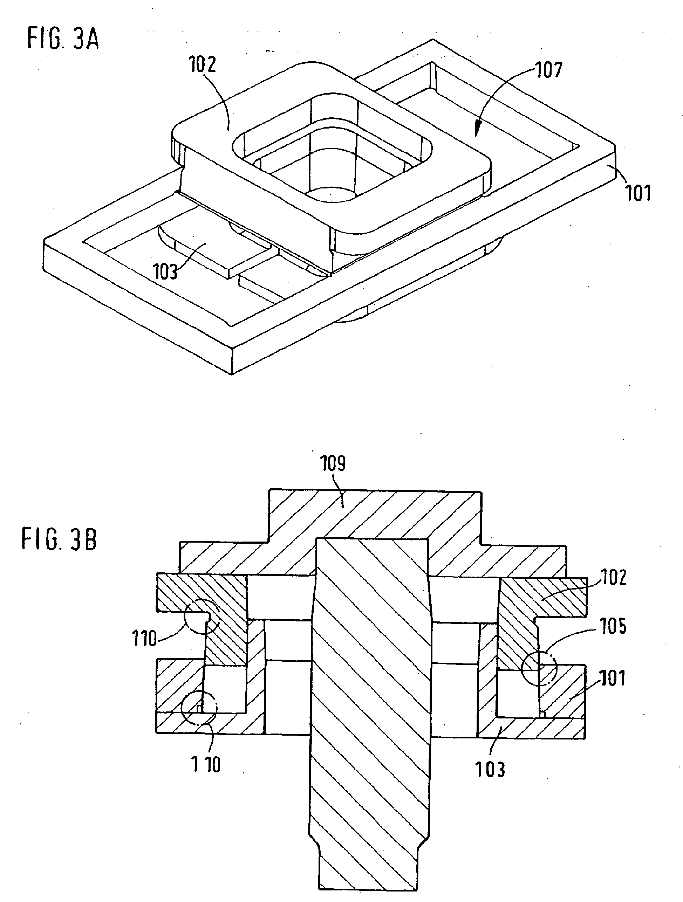

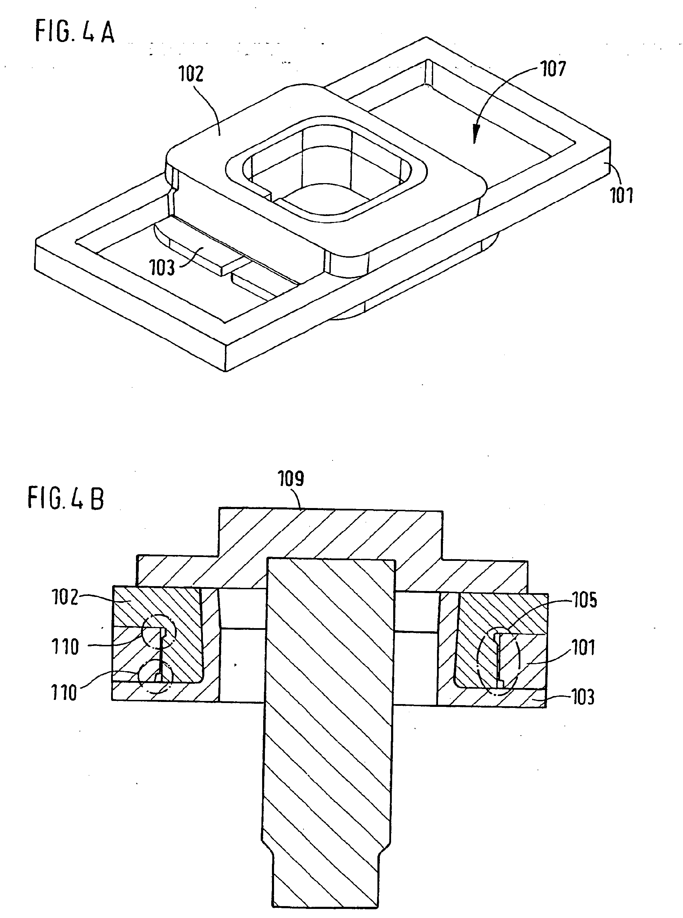

Die **Figuren 3A, 3B****,** **4A und 4B** zeigen ein alternatives Ausführungsbeispiel. Die gewählten Bezugszeichen entsprechen denen der Figuren 1A, 1B, 2A und 2B. In dem gezeigten Beispiel umschließt das Gleitelement 102 mit der Distanzbuchse 103 in dem durchbrochenen Fall gemäß Fig.4B das Kunststoffteil 101, somit liefert das Kunststoffteil 101 eine Führung für eine sich aus dem Gleitelement 102 und der Distanzbuchse 103 ergebende Nut. Vorzugsweise sind dabei das Gleitelement 102 und die Distanzbuchse 103 so ausgeführt, dass diese bei durchbrochener Sollbruchstelle 105 ineinander rasten.

In Fig.3B und in Fig.4B ist jeweils eine Schraube 109 gezeigt, die mit einem Träger verschraubt werden kann und dabei das Gleitelement 102 entlang der Sollbruchstelle 105 von dem Kunststoffteil 101 löst.

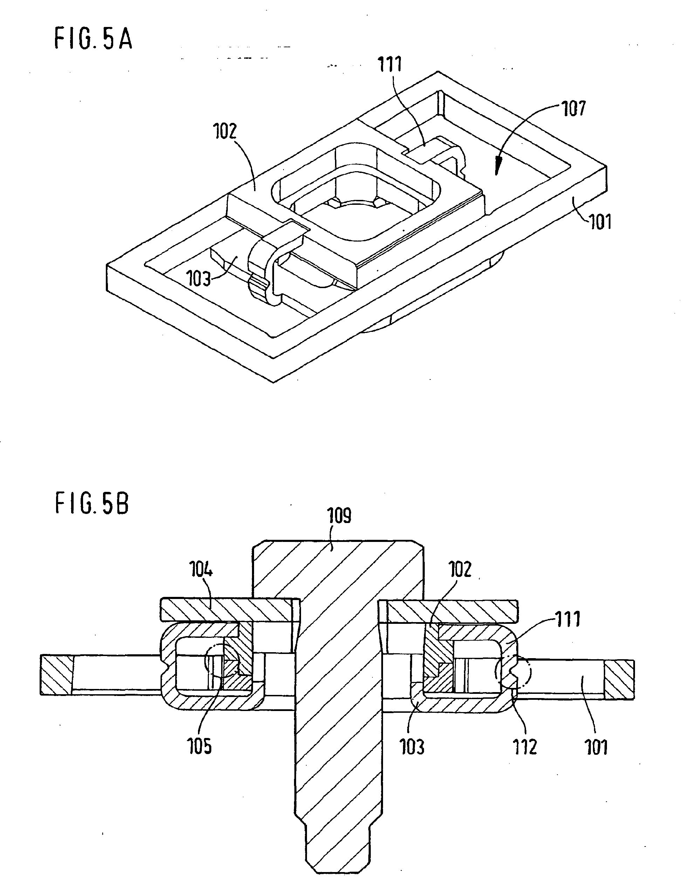

**Fig.5A** zeigt eine alternative Ausführungsform. Die Bezugszeichen entsprechen soweit bekannt denen der vorhergehenden Figuren. Die Distanzbuchse 103 ist mittels zweier Rasthaken 111 an dem Gleitelement 102 gesichert. Jeder Rasthaken 111 weist eine Sollknickstelle 112 auf. **Fig.5B** zeigt eine Schnittzeichnung durch das Kunststoffteil 101 mit dem Gleitelement 102 und der Distanzbuchse 103 umfassend zusätzlich die Schraube 109 sowie die (Unterleg-)Scheibe 104.

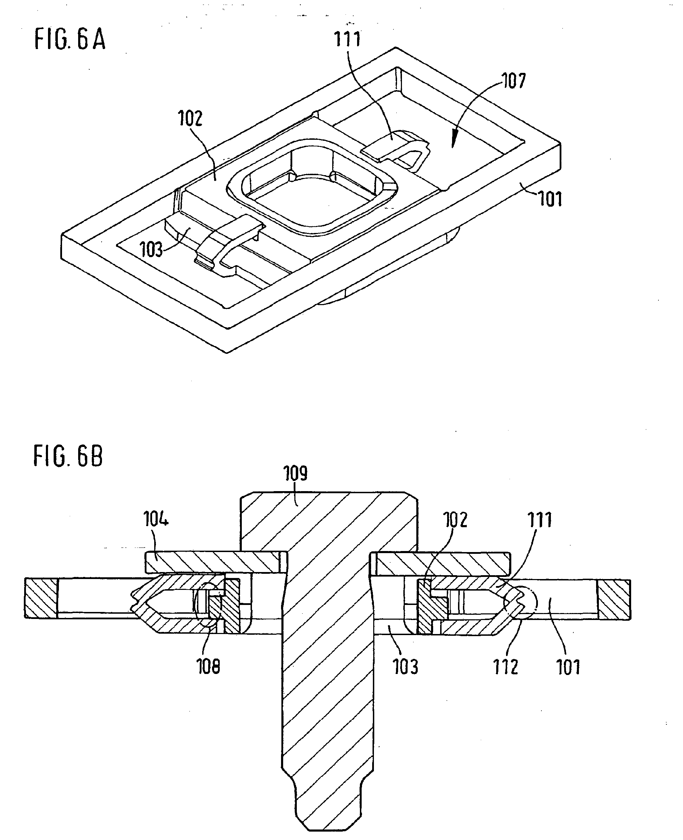

**Fig.6A** zeigt die Ausführungsform gemäß Fig.5A, wobei das Kunststoffteil 101 entlang der Sollbruchstelle 105 von dem Gleitelement 102 gelöst ist und das Gleitelement 102 zumindest teilweise in die Längsnut 107 eingreift.

Entsprechend zeigt **Fig.6B** eine Schnittzeichnung durch das Kunststoffteil 101 mit dem Gleitelement 102. Hierbei ist zu erkennen, dass die beiden Rasthaken 111 an ihren Sollknickstellen 112 abgeknickt sind. Somit ist vorteilhaft gezeigt, wie die Distanzbuchse 103 in dem nicht eingebauten Zustand des Kunststoffteils 101 mit dem Gleitelement 102 gesichert werden kann und zugleich in dem eingebauten Zustand die Mittel zur Sicherung der Distanzbuchse 103 (also die Rasthaken 111) nicht die Funktion des Gleitelements 102 beeinträchtigen.

Alternativ ist es auch möglich, dass das Gleitelement einen Kunststofffortsatz aufweist, der zumindest teilweise (insbesondere in dem durchgebrochenen Zustand) in die Distanzbuchse eingreifen kann. Mittels des Kunststofffortsatzes ist es insbesondere möglich, die Distanzbuchse an dem Gleitelement zu halten.

## Patentansprüche

1. Bauteil (101) umfassend eine längliche rechteckige Aussparung als Längsnut (107)und ein Gleitelement (102), das zum gleitenden Eingriff entlang der Längsnut (107) vorgesehen ist, wobei das Gleitelement eine Sollbruchstelle (105) mit dem Bauteil (101) aufweist, **dadurch gekennzeichnet, dass** eine Distanzbuchse (103) als Einlegeteil (Seite 5, 19) in dem Gleitelement (102) vorgesehen ist, die mit dem Gleitelement (102) verbunden ist, wobei eine Gesamthöhe bzw. eine Kragenhöhe der Distanzbuchse (103)geringfügig höher ist als das Gleitelement (102).

2. Bauteil nach Anspruch 1, bei dem das Bauteil mindestens einen der folgenden Werkstoffe aufweist:
- einen Kunststoff, insbesondere einen faserverstärkten Kunststoff, insbesondere einen kohlefaserverstärkten Kunststoff;
- ein Leichtmetall, insbesondere auf der Basis Aluminium, Magnesium, Titan und/oder deren Legierungen.

3. Bauteil nach einem der vorhergehenden Ansprüche, bei dem das Gleitelement (102) oberhalb und/oder unterhalb der Längsnut (107) angeordnet ist.

4. Bauteil nach einem der vorhergehenden Ansprüche, bei dem die Längsnut (107) zur Aufnahme des Gleitelements (102) ausgestaltet ist.

5. Bauteil nach einem der vorhergehenden Ansprüche, bei dem das Bauteil ein Karosserieteil oder ein Interieurteil eines Fahrzeugs ist.

6. Bauteil nach einem der vorhergehenden Ansprüche, bei dem das Bauteil eines der folgenden Teile umfasst:
- einen Kotflügel,
- einen Stoßfänger,
- ein Schweller,
- eine Heckklappe oder mindestens ein Teil der Heckklappe,
- eine Türe oder mindestens ein Teil der Türe,
- eine Frontklappe oder mindestens ein Teil der Frontklappe,
- einen Spoiler,
- ein Dach,
- ein Interieur-Teil.

7. Bauteil nach einem der vorhergehenden Ansprüche, bei dem das Gleitelement (102) mit dem Bauteil (101) einstückig ausgeführt ist.

8. Bauteil nach einem der vorhergehenden Ansprüche, bei dem das Gleitelement (102) eine Montagestellung zu der Längsnut (107) aufweist.

9. Bauteil nach einem der vorhergehenden Ansprüche, bei dem die Distanzbuchse (103) mit mindestens einem Rasthaken (111) an dem Gleitelement (102) gesichert ist.

10. Bauteil nach Anspruch 9, bei dem die Distanzbuchse (103) mindestens eine Sollknickstelle (112) aufweist anhand derer die Distanzbuchse (103) an dem Gleitelement (102) sicherbar ist, wenn sich das Gleitelement (102) zumindest teilweise in dem gleitenden Eingriff in der Längsnut (107) befindet.

11. Bauteil nach einem der vorhergehenden Ansprüche, bei dem ein Spiel zwischen dem Gleitelement (102) und/oder der Längsnut (107) anhand eines Winkels der Innenwand der Längsnut (107) und/oder anhand eines Winkels der Außenwand des Gleitelements (102) einstellbar und/oder vorgebbar ist.

12. Verfahren zur Befestigung des Bauteils nach einem der Ansprüche 1 bis 11 mit einem Träger, bei dem mit Befestigung des Bauteils (101) an dem Träger das Gleitelement entlang der Sollbruchstelle (105) bricht und zumindest teilweise in die Längsnut eingreift.

13. Verfahren nach Anspruch 12, bei dem das Bauteil (101) mit dem Träger lösbar befestigt wird.

14. Verfahren nach einem der Ansprüche 12 oder 13, bei dem ein Durchbruch für eine Schraube (109) im wesentlichen quadratisch oder im wesentlichen rechteckig ausgeführt ist.

15. Verfahren nach einem der Ansprüche 12 bis 14, bei dem der Träger ein Karosserieteil oder ein Chassis eines Kraftfahrzeugs ist.

## Claims

1. A component (101) comprising an elongate rectangular recess as a longitudinal groove (107) and a sliding element (102), which is provided for sliding engagement along the longitudinal groove (107), wherein the sliding element has a predetermined breaking point (105) with the component (101), **characterised in that** a spacer sleeve (103) is provided as an insert part (page 5, 19) in the sliding element (102) and is connected to the sliding element (102), wherein an overall height or a collar height of the spacer sleeve (103) is slightly higher than the sliding element (102).

2. A component according to claim 1, wherein the component has at least one of the following materials:
- a plastics material, especially a fibre-reinforced plastics material, especially a carbon fibre-reinforced plastics material;
- a light metal, especially based on aluminium, magnesium, titanium and/or alloys thereof.

3. A component according to any one of the preceding claims, wherein the sliding element (102) is arranged above and/or below the longitudinal groove (107).

4. A component according to any one of the preceding claims, wherein the longitudinal groove (107) is configured to receive the sliding element (102).

5. A component according to any one of the preceding claims, wherein the component is a body part or an interior part of a vehicle.

6. A component according to any one of the preceding claims, wherein the component comprises one of the following parts:
- a mudguard,
- a bumper
- a sill
- a tailgate or at least a part of the tailgate,
- a door or at least a part of the door,
- a front hood or at least a part of the front hood,
- a spoiler,
- a roof,
- an interior part.

7. A component according to any one of the preceding claims, wherein the sliding element (102) is configured in one piece with the component (101).

8. A component according to any one of the preceding claims, wherein the sliding element (102) has an assembly position with respect to the longitudinal groove (107).

9. A component according to any one of the preceding claims, wherein the spacer sleeve (103) is secured by at least one engagement hook (111) on the sliding element (102).

10. A component according to claim 9, wherein the spacer sleeve (103) has at least one predetermined bending point (112), with the aid of which the spacer sleeve (103) can be secured on the sliding element (102) when the sliding element (102) is at least partially in the sliding engagement in the longitudinal groove (107).

11. A component according to any one of the preceding claims, wherein a play can be adjusted and/or predetermined between the sliding element (102) and/or the longitudinal groove (107) with the aid of an angle of the inner wall of the longitudinal groove (107) and/or with the aid of an angle of the outer wall of the sliding element (102).

12. A method for fastening the component according to any one of claims 1 to 11 with a carrier, wherein with fastening of the component (101) on the carrier, the sliding element breaks along the predetermined breaking point (105) and at least partially engages in the longitudinal groove.

13. A method according to claim 12, wherein the component (101) is releasably fastened to the carrier.

14. A method according to either of claims 12 or claims 13, wherein an opening for a screw (109) is substantially square or substantially rectangular.

15. A method according to any one of claims 12 to 14, wherein the carrier is a body part or a chassis of a motor vehicle.

## Revendications

1. Composant (101) comportant un évidement longitudinal rectangulaire réalisé sous la forme d'une rainure longitudinale (107) et un élément glissant (102) qui est prévu pour venir en prise en glissant le long de la rainure longitudinale (107), l'élément glissant comportant une ligne de rupture de consigne (105) avec le composant (101),
**caractérisé en ce qu'**
il est prévu dans l'élément glissant (102) une douille d'écartement (103) réalisée sous la forme d'une pièce d'insertion qui est reliée à l'élément glissant (102), la hauteur globale ou la hauteur d'une collerette de la douille d'écartement (103) étant un peu supérieure à celle de l'élément glissant (102).

2. Composant conforme à la revendication 1, qui comprend au moins l'un des matériaux suivants :
- un matériau synthétique, en particulier un matériau synthétique renforcé par des fibres, en particulier un matériau synthétique renforcé par des fibres de carbone,
- un métal léger en particulier à base d'aluminium, de magnésium, de titane et/ou de leurs alliages.

3. Composant conforme à l'une des revendications précédentes, dans lequel l'élément glissant (102) est situé au-dessus et/ou au-dessous de la rainure longitudinale (107).

4. Composant conforme à l'une des revendications précédentes, dans lequel la rainure longitudinale (107) est conformée pour permettre la réception de l'élément glissant (102).

5. Composant conforme à l'une des revendications précédentes, constitué par un élément de carrosserie ou une partie interne d'un véhicule.

6. Composant conforme à l'une des revendications précédentes, comprenant l'un des éléments suivants :
- une aile de véhicule,
- un pare-choc,
- un seuil,
- un hayon ou au moins une partie d'un tel hayon,
- une porte ou au moins une partie d'une telle porte,
- un capot avant ou au moins une partie d'un tel capot avant,
- un déflecteur,
- un toit,
- une partie intérieure.

7. Composant conforme à l'une des revendications précédentes, dans lequel l'élément glissant (102) est réalisé en une seule pièce avec le composant (101).

8. Composant conforme à l'une des revendications précédentes, dans lequel l'élément glissant (102) a une position de montage par rapport à la rainure longitudinale (107).

9. Composant conforme à l'une des revendications précédentes, dans lequel la douille d'écartement (103) est bloquée par au moins un crochet d'encliquetage (111) sur l'élément glissant (102).

10. Composant conforme à la revendication 9, dans lequel la douille d'écartement (103) comporte au moins une ligne de flexion de consigne (112) à l'aide de laquelle la douille d'écartement (103) peut être bloquée sur l'élément glissant (102) lorsque cet élément glissant (102) est au moins partiellement en prise par glissement dans la rainure longitudinale (107).

11. Composant conforme à l'une des revendications précédentes, dans lequel on peut régler et/ou prédéfinir un jeu entre l'élément glissant (102) et/ou la rainure longitudinale (107) à l'aide d'un angle de la paroi interne de la rainure longitudinale (107) et/ou d'un angle de la paroi externe de l'élément glissant (102).

12. Procédé permettant de fixer un composant conforme à l'une des revendications 1 à 11 sur un support, selon lequel lors de la fixation du composant (101) sur le support l'élément glissant se rompt le long de la ligne de rupture de consigne (105) et vient en prise au moins partiellement dans la rainure longitudinale.

13. Procédé conforme à la revendication 12, selon lequel le composant (101) est fixé de manière amovible sur le support.

14. Procédé conforme à l'une des revendications 12 ou 13, selon lequel un perçage pour une vis (109) est réalisé de forme essentiellement carrée ou rectangulaire.

15. Procédé conforme à l'une des revendications 12 à 14, dans lequel le support est une partie de carrosserie ou un châssis d'un véhicule.
